# EUROPEAN PATENT SPECIFICATION

(11) **EP 2 716 954 B1**
(45) Date of publication and mention of the grant of the patent: **31.08.2016**
(21) Application number: 13187624.5
(22) Date of filing: 06.03.2009
(51) Int. Cl.: F16L 55/132, F16L 55/10, F16L 55/105, F16L 55/124

(54) **Plugging machine for interventions of installation, repair, maintenance on pressure fluids supplying piping**
Maschine zum Verschliessen von Versorgungsrohren für druckflüssigkeiten bei der Installation, Reparatur odr Wartung
Machine d'obturation pour des interventions d'installation, réparation et maintenance de canalisations d'alimentation en fluides sous pression

(43) Date of publication of application: 09.04.2014
(62) Divisional of application: 09425089.1
(73) Proprietor: I.S.I.F. S.R.L., 52020 Castelfranco di Sopra (AR) (IT)
(72) Inventor: Odori, Mauro, 52020 Castelfranco di Sopra (AR) (IT)
(74) Representative: Ruzzu, Giammario

(56) References cited:
- EP-A1- 0 488 966
- WO-A1-2005/022012
- FR-A1- 2 638 275
- US-A- 3 774 646
- US-A- 3 774 647
- US-A- 4 381 800
- US-A- 4 493 344
- US-A1- 2004 168 734

## Description

Any intervention on pressure fluids supply piping in service that needs steel piping to be cut and then jointed by welding obliges the operators to stop the gas flow upstream and downstream of the intervention area by means of proper plugging machines, which are available on the market. In order to keep the service on, a by-pass pipe is assembled, which connects the machines.

The plugging machines are assembled on the pipe on which the intervention is carried out, by means of proper shaped fittings and valves (with great dimensional ranges), that are welded to the pipe.

The plugging machines available on the market are conceived according to possible operating modes:
according to a first mode, a plug consists of a steel body coated with rubber and held by a heavy steel frame. The plug is inserted inside the pipe, through the fitting and the valve, in such a way that the pressure of the fluid cannot displace the plug, while the same pressure of the fluid presses the rubber against the inner surface of the pipe, thus making the seal;
according to a second mode, the plug is composed of two steel disks and a rubber gasket inserted between them. The plug is inserted inside the pipe by means of a steel rod and a taper gear system is then operated, through the rod, so that the disks are brought near to each other. This makes them press the gasket between them, which expands the gasket and pushes it against the inner surface of the pipe, thus making the seal.

Both these solutions have advantages. In the first, the heavy steel structure avoids the plug to be displaced, while in the second the seal on the inner surface of the pipe is more efficient.

But these solutions have also drawbacks. In the first solution, a direct control of the seal is not possible, as it is obtained by means of the fluid pressure. In the second solution, the plug is inserted and held by a steel rod, which can be unfit with high pressures and can bring about dangerous consequences in case of damage of the operating gears. Moreover, with high pressured fluids, the rubber gasket can be "extruded", that is it can be extracted from the disks by the pressure.

The publication US2008/0017390 discloses an isolation tool for use in a pipe, which comprises a seal unit, the seal unit being mounted to a launching assembly. The seal unit is adapted for location in a section of pipe, via a single opening in the pipe wall. The seal unit comprises seal elements designed for engaging the pipe inner wall to isolate a section of pipe. The seal elements are initially retained in a retracted configuration. Hydraulic pressure is applied to a cylinder so that a piston located in the cylinder is translated into the seal unit, causing compression of the seal elements, which contacts the inner wall of the pipe.

The EP-A-1 314 926 discloses a method of sealing a pipe (4) and a device for sealing the pipe, which prevents gas leakage out of a pipe stub (20) plugged by a stopper (14) disposed in a tee fitting (10), to allow a permanent cap (22) to be welded onto the pipe (4). The device comprises an expandable plug (30) with a pair of plates (32,34) and a sealing member (36) disposed between the plates. The plates (32,34) can be squeezed together, for example by tightening nuts (42) onto bolts (40) extending through the plates to compress the sealing member (36) and cause the periphery of the sealing member to expand against the inner wall of the pipe (4). Stabilizing means, for example a nut (46) having a reverse thread and a complimentary tool (50), is provided for stabilizing the expandable plug (30) radially within the pipe (4) as the plates (32,34) are squeezed together. The expandable plug (30) is inserted into the pipe stub (20) after the bypassed section of pipe (4) has been removed, and lodged in the pipe by squeezing the plates (32,34) together to expand the sealing member (36) against the inner wall of the pipe stub (20). A vent hole (54) is provided for venting of heated air from the portion of the pipe stub (20) between the expandable plug (30) and the open end of the pipe stub (20). The cap (22) is then welded onto the pipe stub (20).

The French patent Application N. FR 2 638 275 A1 to SEIROB discloses a device for obstructing a pipe in a steam generator of a nuclear reactor. More particularly, said obstructing device comprises a telescopic stem supporting a plug assembly at its free end, this latter substantially comprising: a tapered plate movable along the stem axis; a fixed tapered plate, located at the end of said stem; an annular metallic piece, interposed between the movable and fixed tapered plates; a toroidal gasket, interposed between the movable and fixed tapered plates, externally with respect to the annular metallic piece.

During the operation of the obstructing device, the annular piece presses the toroidal gasket in a radial direction, so that the gasket moves radially and urges against the inner wall of the pipe for sealing the same.

The US Patent No. US 3 774 646 to John J. Smith, and the US Patent No. US 3 774 647 to Saha N. et al, both disclose an inflatable plug element, fit to seal a pipe after being inflated by compressed air, provided with enlarged lips mounted on corresponding seats made in a pair of counterfacing, fixed disks.

The US Patent No. US 4 381 800 to Bruce E. Leslie discloses a high pressure pipe tester plug featuring a plurality of steel grips and a seal which is independent from the grips. The scope of the steel grips is to help locking the plug to the pipe inner wall, and also to help pushing the seal against the pipe wall.

### PLUGGING MACHINE

The plugging machine is composed of the following parts.

A main frame 13 consisting of a steel cylindrical casing 16 with a flange 24 in the lower side to be assembled on the fitting/valve 2. On the lateral surface of the casing 16 there are fittings or flanges 23 for the by-pass and the ventilation valve. On the upper part of the casing there is an exit (provided with a proper sealing gasket) for the steel rod 4 for the insertion of the plug 1 inside the pipe 18 on which the intervention is carried out.

The rod 4 is operated by a hydraulic piston 3 mounted on four columns 20 over the top of the casing 16. The end of the piston has a hole for the movability of the machine.

A heavy round steel structure 21, having its lateral surface coated with a low-friction material, is mounted to the lower end of the insertion rod and has the task of avoiding displacement of plug, when inserted in the hole made in the pipe during the operations.

In the upper and lower surfaces of the round structure there are holes for the fluid to enter the casing 16 and then the by-pass. Also, a hinge 17 is fastened to the lower surface of the round structure and to the body of the plug 1.

As the body of the plug 1 is attached to the round structure by a hinge 17, it can be rotated for the insertion in the pipe 18 on which the intervention is made.

The plug 1 is composed of a hard steel body 25 inside with a piston 5 built therein for the oleodynamic operation of the plug 1. The piston 5 acts on two steel taper disks 6, 7 to bring them near each other (only the external disks 6 is moved) causing the compression, in radial direction, of a rubber, annular gasket 8.

By operating the piston 5, the gasket 8 will in this way be pressed against the inner surface 28 of the pipe making the seal of the plug 1.

Between the movable taper disk 6 and the gasket 8 there are some properly shaped steel plates 10, which, while the plug is operated, follow the expansion of the gasket 8, to which they are attached, sliding in radial direction along guides made on the corresponding taper disk 6.

The function of the steel plates 10 is to avoid that the gasket 8 is "extruded", that is extracted from its place due to the fluid pressure.

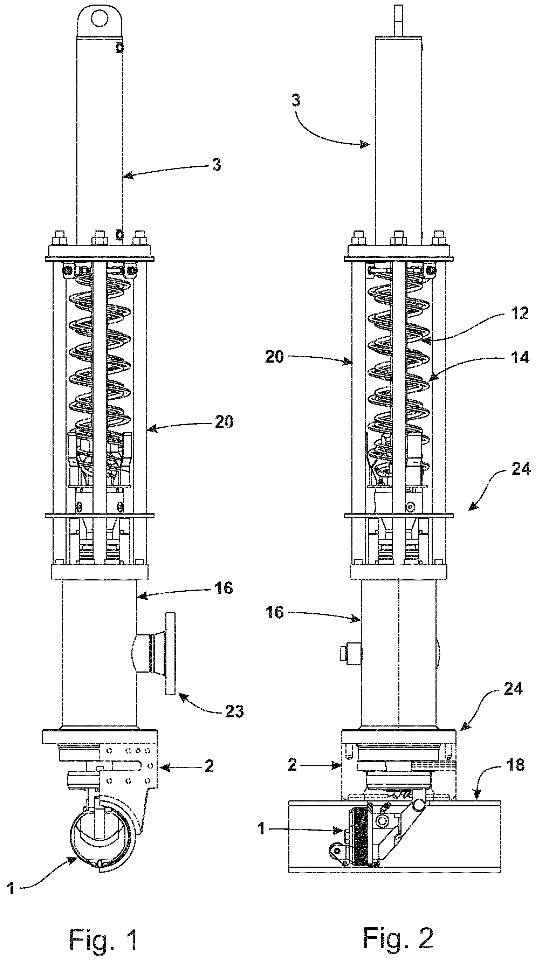

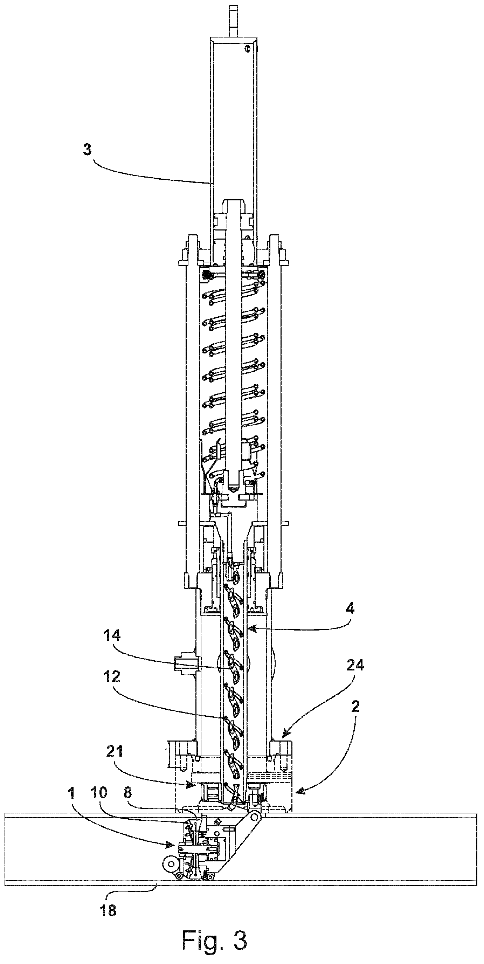

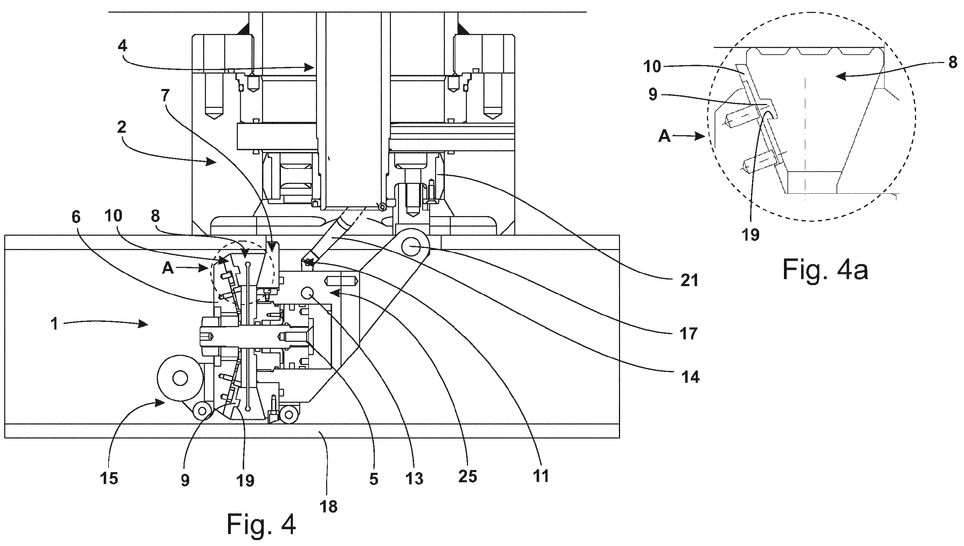

In detail, the plates 10 are linked to the gasket 8 by means of respective teeth 9 made on the side of them facing the gasket 8 (see Fig. 4). The tooth 9 of each plate 10 is introduced into a circular recess 19 made in the annular gasket 8 (see again Fig. 4).

When the movable disk 6 is moved towards the fixed disk 7 and the gasket 8 extends outwardly, the teeth 9 engaged with the recess 19 make the plates 10 slide on the tapered surface of the movable disk 6 in a translation movement towards the inner pipe wall, so that when the rubber annular gasket 8 is totally expanded inside the pipe and its outer diameter is quite external to the disks 6 and 7, the radiant
crown of steel plates 10 have been moved along with the gasket.

Therefore, the plates form a barrier on the side surface of the rubber gasket 8 that avoids the rubber gasket 8 to be extruded, i.e. extracted from between the disks 6, 7 by the pressure of the fluid acting on the other side surface.

The teeth 9 of the plates 10 are slightly bent towards the end of the respective plates turned towards the center of the movable disk 6, when the gasket 8 is mounted, and the circular recess 19 of the gasket 8 has a shape complementary to the shape of the teeth 9. This makes the gasket 8 have a better grip on the teeth 10 of the plates, and ensures that the plates 10 are correctly displaced by the gasket 8 while expanding.

When the plug 1 is released, i.e. the movable taper disk 6 is brought away from the fixed one under the push of the hydraulic piston, which is moved back, the rubber gasket 8 comes back to its unloaded dimensions and the steel plates 10 return in their original positions.

Ducts 14 are made in the body of the plug 1 for inlet and outlet of the oil for the piston operation. The oil circuit is equipped with a safety valve 13, also made in the body of the plug 1, which avoids accidental opening or closing of the plug in case of any failure.

In case the pipe 18 conveys flammable or explosive fluids, nitrogen is used to prevent formation of an explosive atmosphere. The duct 12 for nitrogen injection directly in the pipe is also made in the plug 1, with no need to weld any special fitting therefor.

The movable taper disk 6 carries wheels 15 aimed at making easier the positioning of the plug 1 inside the pipe 18. In the fixed disk there is made an edge which goes in contact with the lower part of the pipe 18 and a ledge is made in the upper part of the disk 7, which goes in contact with the wall of the hole drilled on the pipe. The edge and the ledge give the maximum stability to the plug 1 under the pressure of the fluid.

### OPERATION

After welding the fittings 2, one upstream and one downstream of the intervention area, and after drilling the pipe 18 in the area below the fittings with the drilling machine, the plugging machines are mounted to the fittings. By operating the external pistons 3 of the plugging machines, the plugs 1 are rotated about the hinge 17 and inserted in the pipe 18.

When the plugs 1 are positioned, the inner pistons 5 of the plugs 1 are operated so that the rubber gasket 8 is pressed against the inner surface 28 of the pipe 18, thus making the seal 8 expand. Radial expansion of the rubber causes a simultaneous radial movement of the anti-extrusion steel plates 10.

Now the pipe 18 carrying the fluid is plugged on both sides of the intervention area and it is possible to vent the fluid between the plugs 1, through proper ventilation pipes. Then the intervention can start.

When the work is over, the inner piston 5 of each plug is operated to move back, releasing the gasket 8 and de-activating the plug 1. Then the plug is extracted from the pipe 18 by operating the external hydraulic piston 3, which makes the plug 1 rotate back about the hinge 17.

The plugging machine can now be removed.

## Claims

1. A plugging machine for plugging pipes (18) for transportation of fluid under pressure, including a heavy steel frame (16, 20), and a directly operated sealing system, the frame including a cylindrical steel casing (16), provided with a flange (24) at its lower side to be fastened on a fitting/valve (2) joined to said pipe (18), and the directly operated sealing system including a plug (1) composed of two tapered steel disks (6, 7) with a rubber gasket (8) inserted between them, said rubber gasket (8) being provided with surfaces to cooperate with said tapered steel disks (6,7) with one of said disk (7) being kept stationary and the other disk (6) being moved, so that the disks (6, 7) are brought near to each other and the gasket (8) expanded against the inner surface (28) of the pipe (18), thus making a seal, wherein on the tapered surface of the movable disk (6) there is provided a series of radial guides along which a plurality of steel plates (10) of the plugging machine move while the plug (1) is operated, so as to follow the expansion of the gasket (8), **characterised in that** the said plurality of steel plates (10) is linked to the corresponding surface of the gasket (8), which said corresponding surface of the gasket (8) slidingly cooperates with said movable tapered steel disk (6), wherein, in use, the said plurality of steel plates (10) is sliding in radial direction and acting so as to avoid that the gasket (8) is extracted from its place due to the fluid pressure.

2. A machine as in claim 1, wherein said plates (10) feature each one a tooth (9) on the side facing said gasket (8), and said gasket (8) has a concentric circular recess (19) made on the side facing said plates (10), with said teeth (9) being introduced into said concentric circular recess so as to link the plates (10) to said gasket (8).

3. A machine as in claim 2, wherein said teeth (9) of said plates (10) are bent towards the end of the respective plates turned towards the center of the movable disk (6) when the gasket (8) is mounted, and the circular recess (19) of said gasket (8) has a shape complementary to the shape of the teeth (9).

4. A machine as in any of claims 1 to 3, wherein said plug is connected to said frame by means of a hinge (17), and a rod (4) linked to a plug (1) is provided, passing through said cylindrical steel casing (16), so that, when said rod (4) is moved up and down said plug (1) rotates about the hinge (17) and is inserted into or removed from said pipe (18) on which the intervention is carried out, respectively.

5. A machine as in any of claims 1 to 4, wherein a hydraulic cylinder (3) is provided on top of said frame (16) and acts on said rod (4), for insertion or removal of said plug (1) into and from said pipe (18).

6. A machine as in any of claims 1 to 5, said plug (1) features a second hydraulic cylinder (5) for moving the movable steel tapered disk (6) nearer to the stationary disk (7) so making the rubber gasket (8) between them expand radially to engage the inner pipe wall (28).

7. A machine as in any of claims 1 to 6 including safety valves (13) also made in the body (25) of the plug (1), which avoids accidental opening or closing of the plug in case of any failure.

8. A machine as in one of claims 1 to 7, wherein nitrogen is injected inside the intervention area of the pipe (18) to avoid formation of flammable or explosive mixtures with air and the fluids being transported.

9. A machine as in claim 8, wherein said plug (1) features a system of internal ducts (11) by means of which nitrogen can be conveyed into the pipe (12), ahead the plug (1) towards the intervention area.

## Patentansprüche

1. Vorrichtung zum Verschliessen von Rohren (18) für die Durchleitung von druckflüssigkeiten, mit einem schweren Stahlrahmen (16, 20), und ein direkt betrieben Dichtungssystem, wobei der Rahmen einem zylindrischen Stahlgehäuse (16) aufweist, der mit einem an seiner unteren Seite liegenden und an einem Anpassung/Ventil (2), die mit dem Rohr (18) verbunden ist, zu befestigenden Flansch (24) versehen ist, und wobei das direkt betrieben Dichtungssystem einen Pfropfen (1) enthält, der zwei konischen Stahlscheiben (6, 7) und eine zwischen ihnen eingefügt Gummidichtung (8) umfasst, und die Gummidichtung (8) mit sich verjüngenden, mit der konischen Stahlscheiben (6, 7) in Kontakt gebracht, Oberflächen versehen ist, wobei einer der Scheibe (7) stationär gehalten und die andere Scheibe (6) bewegt wird, so dass die Scheiben (6, 7) nahe miteinander gebracht werden und die Dichtung (8) gegen die Innenfläche (28) des Rohres (18) erweitert wird, wodurch eine Siegel entsteht,
**dadurch gekennzeichnet, daß**
eine Reihe von radialen Führungen auf der konischen Oberfläche der beweglichen Scheibe (6) vorgesehen sind, entlang der eine Vielzahl von Stahlplatten (10) während des Betriebs der Pfropfen (1) bewegen, um die Erweiterung der Dichtung zu folgen (8), wobei die Stahlplatten mit der entsprechenden konischen Fläche der Dichtung verbunden sind, und in radialer Richtung gleiten, um das Herausziehen der Dichtung (8) von seiner Stelle aufgrund des Fluiddrucks zu vermeiden.

2. Vorrichtung gemäß Anspruch 1, wobei die Platten (10) mit jeweils einem Zahn (9) auf der der Dichtung (8) zugewandt Seite vorgesehen sind, und wobei die Dichtung (8) eine konzentrische, kreisförmige Ausnehmung (19) auf der den Platten (10) zugewandt Seite aufweist, und wobei die Zähne (9) in die konzentrische kreisförmige Ausnehmung eingebracht sind, um die Platten (10) mit der Dichtung (8) zu verbinden.

3. Vorrichtung gemäß Anspruch 2, wobei ist die Dichtung (8) angebracht, die Zähne (9) der Platten (10) gegen Ende der jeweiligen Platten in Richtung der Mitte der beweglichen Scheibe (6) gebogen sind, und die kreisförmige Ausnehmung (19) der Dichtung (8) eine Form komplementär zu der Form der Zähne (9) aufweist.

4. Vorrichtung nach einem der Ansprüche 1 bis 3, wobei der Pfropfen mit dem Rahmen mittels eines Scharniers (17) verbunden ist, und wobei einer mit dem Pfropfen verbunden Stange (4) vorgesehen ist, die durch die zylindrischen Stahlgehäuse (16) hindurch geht, so dass wenn die Stange (4) auf- und abbewegt wird der Stopfen (1) sich um das Scharnier (17) dreht und bzw. eingefügt in oder entfernt von dem Rohr (18), auf dem der Vorgang durchgeführt is, wird.

5. Vorrichtung nach einem der Ansprüche 1 bis 4, wobei ein Hydraulikzylinder (3) auf der Oberseite des Rahmens vorgesehen ist, der auf die Stange (4), zum Einsetzen oder Entfernen des Stopfens (1) in die und aus das Rohr (18), wirkt.

6. Vorrichtung nach einem der Ansprüche 1 bis 5, wobei der Stopfen (1) einen zweiten Hydraulikzylinder (5) aufweist, der die bewegliche konische Stahlkeilscheibe (6) näher an der stationären Scheibe (7) bewegt, so dass die Gummidichtung (8) zwischen ihnen radial ausdehnt und an der Rohrinnenwand (28) eingreift.

7. Vorrichtung nach einem der Ansprüche 1 bis 6, wobei die Vorrichtung ein Sicherheitsventil (13), das auch in dem Körper (25) des Stopfens (1) ausgebildet ist, aufweist, das ein versehentliches Öffnen oder Schließen des Stopfens im Falle eines Ausfall vermeidet.

8. Vorrichtung nach einem der Ansprüche 1 bis 7, wobei Stickstoff in der Vorgangsbereich des Rohres (18) eingespritzt wird, um Bildung von brennbaren oder explosionsfähigen Gemische mit Luft und den transportierten Flüssigkeiten zu vermeiden.

9. Vorrichtung gemäß Anspruch 8, wobei der Stopfen (1) ein System von inneren Leitungen (11) verfügt, mittels dessen Stickstoff in das Rohr (12), vor dem Stopfen (1) in Richtung der Interventionsbereich, gefördert werden kann.

## Revendications

1. Machine d'obturation pour obturer canalisations d'alimentation en fluides sous pression, comprenant un châssis robuste en acier (16, 20), et une système d'étanchéité commande directement, les châssis comportant un boîtier cylindrique en acier (16) muni d'une bride (24) à sa partie inférieure pour être fixé sur un raccord/soupape (2) relié à ladite canalisation (18) et le système d'étanchéité commande directement comprenant un bouchon (1) composé de deux disques coniques en acier (6, 7) avec un joint en caoutchouc (8) inséré entre eux, ledit joint en caoutchouc (8) étant fournie de surfaces coniques en contact avec lesdits disques en acier conique (6,7) avec l'un desdits disques (7) étant maintenu stationnaire et l'autre disque (6) étant déplacé, de sorte que les disques (6, 7) sont placées l'un près de l'autre et le joint d'étanchéité (8) élargi contre la surface intérieure (28) de la canalisation (18), faisant ainsi l'étanchéité,
**caractérisé en ce que**
sur la surface conique du disque mobile (6), il est prévu une série de guides radiaux le long de laquelle une pluralité de plaques d'acier (10) de se déplacent tandis que le bouchon (1) est actionné, de manière qu'elles suivent la dilatation du joint d'étanchéité (8), à laquelle ils sont liés à sa surface conique correspondante, coulissant dans le sens radial et agissant de manière à éviter que le joint d'étanchéité (8) est extraite de son logement en raison de la pression du fluide.

2. Machine selon la revendication 1, dans lequel lesdites plaques (10) comportent chacun une dent (9) sur le côté faisant face audit joint d'étanchéité (8), et ledit joint d'étanchéité (8) comporte une cavité circulaire concentrique (19) réalisée sur le côté tourné lesdites plaques (10), lesdites dents (9) étant introduit dans ledit cavité circulaire concentrique de manière à relier les plaques (10) audit joint d'étanchéité (8).

3. Machine selon la revendication 2, dans lequel lesdites dents (9) desdites plaques (10) sont pliées vers l'extrémité des plaques respectives tournées vers le centre du disque mobile (6) lorsque le joint d'étanchéité (8) est monté, et le cavité circulaire (19) dudit joint d'étanchéité (8) a une forme complémentaire à la forme des dents (9).

4. Machine selon l'une quelconque des revendications 1 à 3, dans lequel ledit bouchon est relié audit châssis au moyen d'une charnière (17), et une tige (4) est prévu reliée à le bouchon (1) et passant à travers ledit boîtier en acier cylindrique (16), de sorte que lorsque ce lesdites tige (4) est déplacée vers le haut et vers le bas ledit bouchon (1) tourne autour de la charnière (17) et est inséré dans ou retiré de ladite canalisation (18) sur lequel l'intervention est réalisé, respectivement.

5. Machine selon l'une quelconque des revendications 1 à 4, dans lequel un vérin hydraulique (3) est prévu au-dessus dudit châssis (16) et agit sur ladite tige (4), pour l'insertion ou le retrait dudit bouchon (1) dans et de ladite canalisation (18).

6. Machine selon l'une quelconque des revendications 1 à 5, dans lequel ledit bouchon (1) comporte un deuxième vérin hydraulique (5) pour déplacer le disque conique en acier mobile (6) plus près du disque fixe (7), rendant ainsi le joint d'étanchéité en caoutchouc (8) entre elles se dilater radialement pour engager la paroi du tube interne (28).

7. Machine selon l'une quelconque des revendications 1 à 6, comprenant des soupapes de sécurité (13) également réalisés dans le corps (25) du bouchon (1), ce qui évite toute ouverture intempestive ou de fermeture du bouchon en cas de défaillance.

8. Machine selon l'une quelconque des revendications 1 à 7, dans lequel l'azote est injecté à l'intérieur de la zone d'intervention de la canalisation (18) afin d'éviter la formation de mélanges inflammables ou explosifs avec l'air et les fluides transportés.

9. Machine selon la revendication 8, dans lequel ledit bouchon (1) comporte un système de canaux internes (11) au moyen duquel l'azote peut être acheminé dans le canalisation (12), devant le bouchon (1) vers la zone d'intervention.
